**Europäisches Patentamt**

(19) **European Patent Office**

**Office européen des brevets**

(11) Numéro de publication: **0 003 696**
**B1**

(12) **FASCICULE DE BREVET EUROPEEN**

(45) Date de publication du fascicule de brevet: **25.11.81**

(51) Int. Cl.³: **G 01 S 5/16,** F 41 G 3/22,
**G 02 B 5/04**

(21) Numéro de dépôt: **79400055.4**

(22) Date de dépôt: **26.01.79**

(54) **Dispositif de localisation de source rayonnante et son utilisation dans un instrument de repérage de direction.**

(30) Priorité: **03.02.78 FR 7803099**

(43) Date de publication de la demande:
**22.08.79 Bulletin 79/17**

(45) Mention de la délivrance du brevet:
**25.11.81 Bulletin 81/47**

(84) Etats Contractants Désignés:
**BE DE GB SE**

(56) Documents cités:
**DE - B - 1 285 182**
**FR - A - 1 463 310**
**FR - A - 2 322 356**
**GB - A - 1 520 154**
**US - A - 3 084 261**
**US - A - 3 244 889**
**US - A - 3 917 412**
**US - A - 3 951 550**

(73) Titulaire: **THOMSON-CSF**
**173, Boulevard Haussmann**
**F-75360 Paris Cedex 08 (FR)**

(72) Inventeur: **Reymond, Jean-Claude**
**"THOMSON-CSF" - SCPI 173, bld Haussmann**
**F-75360 Paris Cedex 08 (FR)**
Inventeur: **Hidalgo, Jean Luc**
**"THOMSON-CSF" - SCPI 173, bld Haussmann**
**F-75360 Paris Cedex 08 (FR)**

(74) Mandataire: **Trocellier, Roger et al,**
**"THOMSON-CSF" - SCPI 173, bld Haussmann**
**F-75360 Paris Cedex 08 (FR)**

Courier Press, Leamington Spa, England.

Dispositif de localisation de source rayonnante et son utilisation dans un instrument
de repérage de direction

La présente invention concerne un dispositif de localisation de source rayonnante et elle s'applique notamment à la réalisation d'un instrument de repérage de direction.

Il est parfois utile de repérer avec une certaine précision la direction vers laquelle un axe est orienté sans avoir de contact matériel avec celui-ci.

On rencontre ce type de problème, en particulier, dans les appareils viseurs de casque utilisés dans les avions de combat; le fonctionnement d'un tel appareil est rappelé brièvement ci-après. Par un instrument collimateur annexe, le pilote voit à travers une glace semiré-fléchissante solidaire du casque et interposée sur un axe de vision monoculaire, l'image d'un réticule projeté à l'infini en superposition avec la scène extérieure.

Lorsqu'il veut désigner une cible de la scène observée, il amène à coïncider ce réticule avec la cible et signale que la coïncidence est réalisée au moyen par exemple d'une commande par bouton poussoir prévue à cet effet.

A condition de repérer, au moment de la signalisation, la position exacte de son casque, il est alors assez aisé de déterminer par rapport à l'avion, la direction de visée du pilote et de désigner l'objectif à un système d'arme, ou de pointer dans cette direction un appareil optique ou autre.

la présente invention permet de réaliser un instrument de repérage de direction répondant à un tel problème. La direction à repérer est liée à une structure libre dont les mouvements s'effectuent dans un volume spatial déterminé. Dans l'application particulière envisagée, la structure libre comporte le casque du pilote et le volume est délimité par les débattements possibles de la tête du pilote à l'intérieur du cockpit. Le dispositif de repérage comporte une première partie solidaire de la structure mobile et une seconde partie fixée à une structure extérieure, l'avion en l'occurrence, pour mesurer les mouvements angulaires relatifs de la structure mobile par rapport à un système d'axes de référence lié à la structure externe. Le dispositif de repérage permet ainsi, à partir de points fixes par rapport à l'avion, de repérer la position d'un objet porté par le casque du pilote, et de remonter, par là, grâce à un calcul, à la direction de visée.

Le casque étant porté par le pilote, il importe que la partie du dispositif qui est fixée au casque soit la plus légère, la moins encombrante, et présente le minimum de danger et d'inertie.

Des instruments de repérage de direction de ce type existent sous différentes formes.

Selon des techniques connues, l'instrument de repérage de direction comporte, sur la structure mobile, trois diodes électroluminescentes disposées au sommet d'un triangle, chaque diode émettant un faisceau lumineux large pour couvrir dans la mesure du possible un demiespace soit $2\pi$ steradians. Les diodes sont alimentées séparément et séquentiellement en sorte qu'elles rayonnent successivement. La structure externe comporte un dispositif de localisation groupant un cache optique et des moyens de photodétection. Le cache comporte deux fentes pour déterminer avec la diode émettrice constituant une source lumineuse ponctuelle, deux plans secants selon une droite passant par le point source. Suivant une réalisation, les deux fentes sont disposées en V et associées à un unique réseau linéaire d'éléments détecteurs (Brevet français publié No. 2 322 355), suivant une autre réalisation chaque fente est associée à une barrette détectrice (Brevet US N° 3.951.550) réalisable sous forme d'un dispositif à transfert de charge, ou circuit CCD (abréviation de "Charged Coupled Device"). Les points d'intersection des plans avec le (ou les) réseau linéaire détecteur permettent de calculer la position spatiale de la droite d'intersection et donc de localiser angulairement la source. L'opération est effectuée pour chaque diode, les trois directions correspondantes sont déterminées par le calcul et consécutivement la position spatiale des diodes car les dimensions du triangle sont connues. La direction de visée est liée au triangle selon une relation prédéterminée (par exemple, deux des diodes peuvent être disposées sur le casque selon une droite parallèle à cette direction) et se déduit aisément du positionnement du triangle.

Le but de l'invention est de réaliser un dispositif de localisation formé d'éléments simples, utilisant également un réseau linéaire de détecteurs mais permettant de collecter une énergie rayonnée par la source plus importante et de ce fait, d'accroître le rapport signal à bruit; un autre avantage qui apparaîtra dans la description qui suit est dû au fait que, selon un mode de réalisation préféré, le dispositif permet la localisation spatiale de la source au lieu simplement d'une localisation directionnelle, c'est-à-dire angulaire.

Un autre but de l'invention est de réaliser un instrument de repérage de direction utilisant le dispositif de localisation spatiale avec un groupement de sources lumineuses ponctuelles fixées sur la structure mobile, un tel ensemble permettant d'accroître la fiabilité et la précision de mesure étant donné que chaque source peut être localisée dans l'espace et que ·la disposition relative connue de sources autorise des vérifications complémentaires par le calcul.

Suivant un objet de l'invention le dispositif de localisation de source rayonnante comporte un réseau linéaire d'éléments photosensibles associé à un cache optique laissant passer le rayonnement de la source compris dans deux plans secants, un circuit de traitement des signaux détectés identifiant le rang respectif des éléments sensibilisés par le rayonnement de la source compris dans les dits plans et un circuit de calcul déterminant à partir de l'identification de rang la localisation spatiale de la droite d'intersection des plans par rapport au dispositif de localisation, caractérisé en ce que le cache optique est réalisé au moyen de deux lentilles cylindriques et d'un montage prismatique déviateur introduisant une rotation d'image de 90° et qui est interposé sur le trajet optique parvenant à une des lentilles; les lentilles étant identiques, disposées avec les axes longitudinaux parallèle à une première direction cartésienne de référence, et dont les plans focaux sont coplanaires au niveau du réseau détecteur, lequel est parallèle aux axes longitudinaux des lentilles et orienté selon une deuxième direction cartésienne de référence; le montage prismatique comportant deux prismes rectangles, isocèles, disposés face hypothénuse contre face hypothénuse et dont les arêtes opposées à ces faces forment entre elles, un angle de 45°, le plan des faces hypothénuses étant parallèle au plan focal commun et l'une des arêtes ayant une direction orthogonale à celle du réseau.

Les particularités et avantages de l'invention apparaîtront au cours de la description qui suit donnée à titre d'exemple à l'aide des figures annexées qui représentent:

— la figure 1, un schéma simplifié d'un dispositif de localisation selon l'invention;

— la figure 2, un schéma de rappel du fonctionnement du montage déviateur à prismes utilisé dans le dispositif de la figure 1;

— la figure 3, un schéma simplifié d'un instrument de repérage de direction utilisant un dispositif de localisation selon la figure 1;

— la figure 4, un schéma partiel d'une variante de réalisation du dispositif de localisation;

— la figure 5, un schéma fonctionnel relatif au mode préféré d'exploitation utilisant deux dispositifs de localisation;

— la figure 6, un diagramme d'un exemple de réalisation d'un instrument selon la figure 3 montrant plus particulièrement les circuits électroniques de traitement et de calcul; et

— la figure 7, des formes d'onde relatives au fonctionnement des circuits de traitement selon la figure 6.

Un instrument de repérage selon l'invention comporte, de manière connue, un ou plusieurs groupements de sources lumineuses ponctuelles solidaires de la structure mobile dont la direction d'un axe est à déterminer de manière instantanée et à tout instant. Chacun des groupements compte au moins trois sources arrangées de façon non-colinéaire pour former un triangle, de préférence quelconque. En outre des moyens d'alimentation sont prévus pour assurer une alimentation sélective des sources, l'une après l'autre, et ce, séquentiellement à cadence élevée.

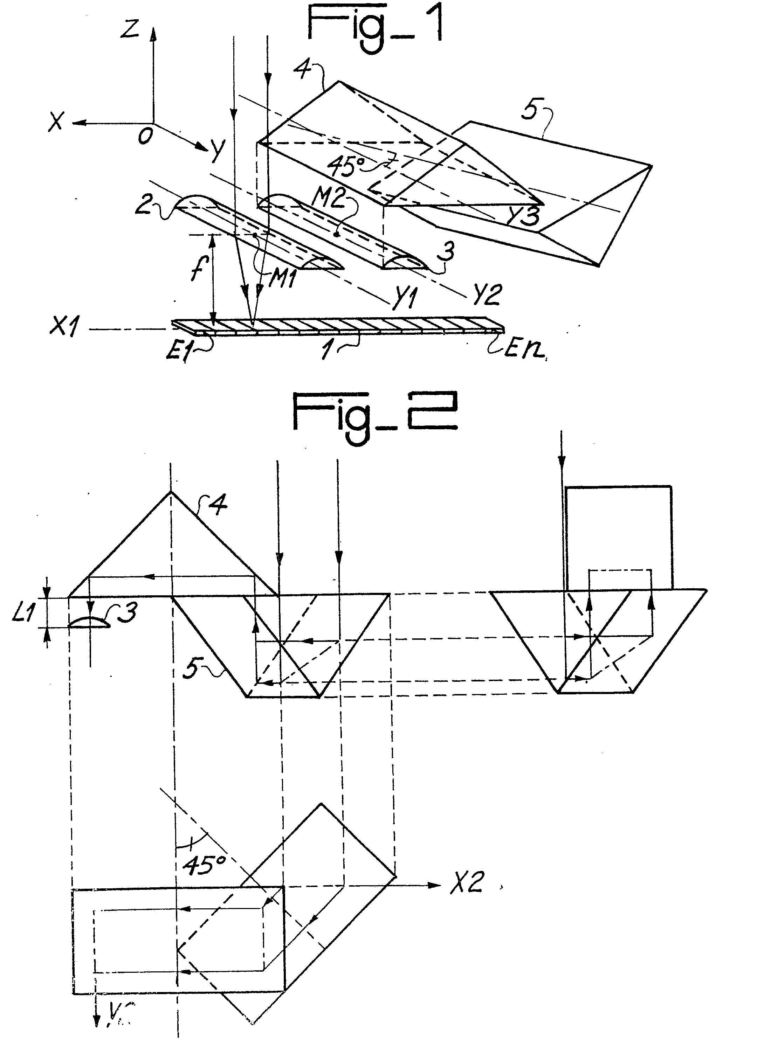

Le groupement de sources est destiné à fonctionner en combinaison avec un dispositif de localisation du type représenté sur la figure 1 où il est fait abstraction, par souci de simplification des circuits de traitement et de calcul en aval de la détection.

Le dispositif de localisation, ou capteur, solidaire de la structure externe comporte un détecteur linéaire d'éléments photosensibles tel que une barrette en circuits CCD, ou un dispositif équivalent. La direction longitudinal X1 de la barrette 1 correspond à une première direction d'un trièdre cartésien de référence lié à la structure externe. La barrette est positionnée sensiblement dans le plan focal commun de deux éléments optiques 2 et 3 considérés identiques du type lentille cylindrique ou équivalent. Les lentilles 2 et 3 sont disposées parallèlement l'une à l'autre, leurs axes longitudinaux Y1 et Y2 étant orientés perpendiculairement à la direction X1 de la barrette. L'axe longitudinal d'une lentille cylindrique est l'homologue du centre optique dans une optique sphérique. La direction des axes Y1 et Y2 longitudinaux correspond à la deuxième direction de référence Y. Le plan photosensible de la barrette 1 est parallèle aux faces planes respectives des lentilles 2, 3 qui sont coplanaires dans un plan parallèle au plan XOY de référence. La barrette 1 se situe dans le plan focal approximé de chaque lentille, obtenu en assimilant la zone focale à un plan; f désigne la distance focale et correspond à la distance de séparation entre la barrette et les faces planes des lentilles. La barrette est située à l'aplomb du plan médian transversal passant par les centres M1 et M2 des lentilles pour obtenir une disposition symétrique.

Un dispositif optique prismatique est associé à l'une des deux lentilles pour obtenir une rotation d'image de 90° sans inversion. Ce dispositif peut consister comme représenté en un montage connu constitué de deux prismes 4 et 5 isocèles, rectangles, positionnés faces hypothénuse sur face hypothénuse et dont les arêtes, ou les axes, forment entre eux un angle de 45°. La lentille 3 figurée est associée à l'ensemble des prismes 4 et 5, la direction axiale Y3 du prisme 4 est parallèle à la direction Y de référence. Le plan commun des faces hypothénuses est parallèle au plan XOY du trièdre de référence et à une distance L1 de la lentille 3 (figure 2) positionnée au dessous du prisme 4.

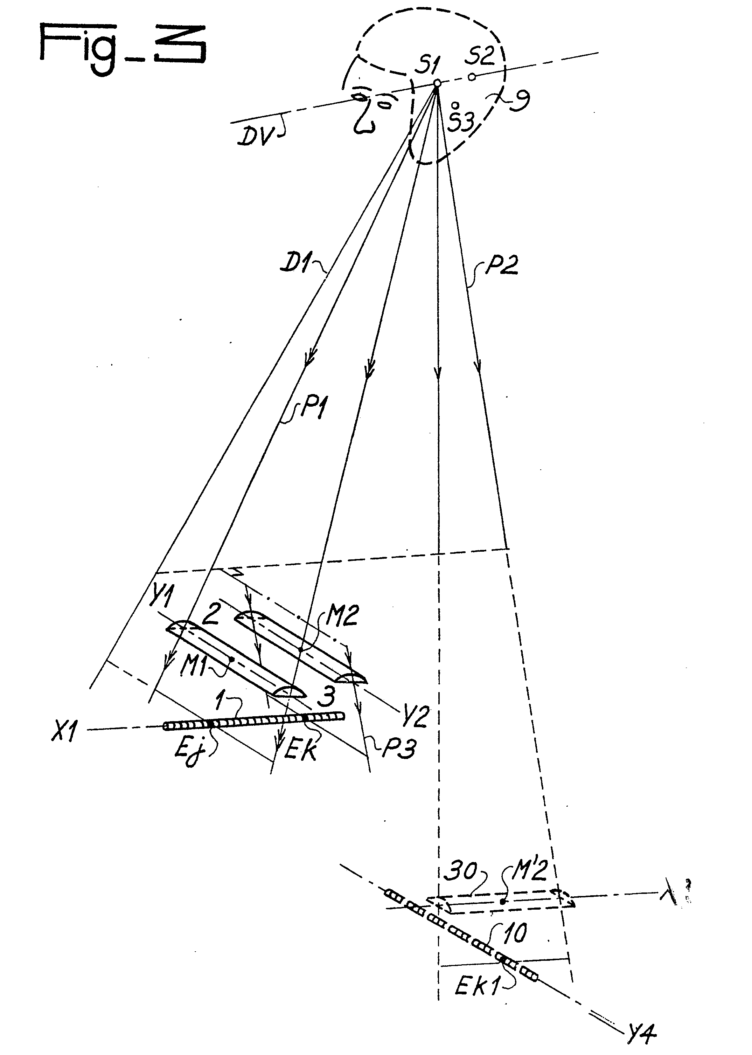

La figure 2 illustre à titre de rappel, en vue d'élévation, vue de dessus et vue de côté, le fonctionnement des prismes montrant la rotation d'image obtenue entre la direction X2 et la direction Y2 orthogonales l'une à l'autre, chaque prisme donnant d'un point le symétrique par rapport à son arête. Le produit des deux symétries par rapport aux deux arêtes se traduit par une rotation de 90°. Ainsi l'image 30 de la lentille 3 vue de la face hypothénuse du prisme 5 est tournée de 90° comme représenté sur la figure 3 où par souci de simplification, le bloc de prismes a été omis en indiquant simplement les traces des trajets optiques au niveau du plan commun des faces hypothénuses.

Le fonctionnement du dispositif de localisation est apparent sur la figure 3. Une partie du rayonnement émis, de préférence selon un diagramme omnidirectionnel, par une source lumineuse S1 de petite dimension située à distance sur la structure mobile 9, parvient sur la lentille 2 sous forme de rayons parallèles, ou sensiblement, à la direction présentée par la source. Ce rayonnement incident est focalisé par l'optique 2 sur un élément ponctuel Ej de la barrette 1. En toute rigueur, à cause notamment des phénomènes de diffraction et de l'approximation faite dans le contexte d'un plan focal pour l'élément 2, il y aura généralement plusieurs éléments voisins sensibilisés par le rayonnement reçu, il en sera tenu compte ultérieurement; pour l'explication présente du fonctionnement on considère à titre de simplification un seul élément Ej sensibilisé. Cet élément est situé à l'intersection de la direction X1 de la barrette avec le plan P1 défini par la source ponctuelle S1 et l'axe optique Y1 de l'élément 2. La coordonnée selon X1 de l'élément Ej, c'est-à-dire le rang j de l'élément concerné, est obtenu par lecture électronique de la barrette et traitement du signal SV recueilli. Les circuits de traitement comportent un calculateur permettant d'identifier le plan P1 précité à partir de l'information de rang j de l'élément Ej sensibilisé. Il en est de même pour la seconde lentille 3 mais, compte tenu du montage des prismes 4 et 5, on identifie le plan P2 passant par la source S1 et par l'axe optique X2 image de l'axe Y2 et par l'élément Ek1 image de l'élément Ek sensibilisé par l'intermédiaire de l'optique de focalisation 3. Le plan P2 perpendiculaire au plan P1, représente le trajet optique à l'entrée du prisme 5 et le plan P3 celui en sortie du prisme 4, résultant d'une rotation de 90°, le rayonnement correspondant se trouvant focalisé sur l'élément Ek. La barrette 10 de direction Y4 parallèle à Y représente l'image de la barrette 1 vue à travers l'ensemble des prismes.

Les caractéristiques opto-mécaniques du montage de prismes par rapport à la lentille 3 étant connues, les positions des axes image X2 et Y4 sont connues, ainsi que celle de l'élément image Ek1 par le rang k de détection. Il est donc possible de déterminer également par le calcul le plan P2 passant par la source S1 et l'axe X2 à partir de l'information de rang k. Consécutivement le calcul permet de définir la droite D1 d'intersection des plans orthogonaux P1 et P2, cette droite constituant la direction spatiale de localisation de la source S1 détectée par le capteur. Il est procédé de même ensuite pour localiser la source S2, puis la source S3 d'un groupement de trois sources pour obtenir respectivement deux autres directions de localisation D2 et D3. Les dimensions du triangle S1, S2 et S3 étant connues avec précision, celui-ci peut dès lors être localisé spatialement sur les directions D1, D2, et D3 et par suite la position de la structure mobile 9, tel un casque de pilotage, sur lequel le groupement de sources est disposé. Comme, par construction, la direction de l'axe DV à repérer, par exemple la direction S1—S2, est également connue avec précision par rapport au triangle S1, S2, S3 le calcul donne finalement l'information de direction DV désirée.

Il apparaît dans le fonctionnement décrit à l'aide de la figure 3 que la longueur des trajets optiques entre une source ponctuelle rayonnante et les lentilles 2 et 3 sont différentes par suite des réflexions dans le montage à prismes 4, 5. Cette différence de trajet peut être compensée par introduction d'un bloc 6, en matériau transparent, par exemple un bloc de verre, sur le trajet optique incident parvenant sur la lentille 2 comme il est représenté schématiquement sur la figure 4. L'épaisseur L2 du bloc et l'indice de réfraction du matériau sont déterminés pour compenser la différence du trajet optique moyen, c'est-à-dire celui selon la direction médiane du champ de réception $\theta$ envisagé, la direction Z1 dans l'exemple figuré. La dimension transversale L3 du bloc est déterminée par la largeur du champ à recevoir.

Dans le concept de réalisation suivant la figure 4, l'axe Y1 de la lentille 2 va se trouver transposé sensiblement au niveau du plan XY passant par l'axe X2 de la lentille image 30 (figure 3) et les points Ej, Ek1, M1 et M2 (image du centre M2 de la lentille 3) peuvent être désignés par les coordonnées simplifiées suivantes: Ej (xa, o, o), Ek1 (o, yb, o), M1 (x1, 0, z1), M'2 (O, y2, z2); d'où l'on tire les relations définissant les plans P1 et P2:

$$z1x + (xa - x1) z = z1 \, xa \qquad \text{(plan P1)}$$

$$z2y + (yb - y2) z = z2 \, yb \qquad \text{(plan P2)}$$

à partir desquelles le calcul donne la direction D1 qui vérifie ces deux équations. Le calcul est similaire pour les directions D2 et D3. Après illumination successives des sources S1, S2, et S3, le circuit de calcul est donc en mesure de délivrer l'information de direction DV cherchée.

De manière préférentielle, il est utilisé un groupement de deux dispositifs capteurs C1 et C2 identiques du type décrit précédemment disposés à une distance déterminée L4 l'un de l'autre comme représenté schématiquement sur la figure 5. Dans ces conditions, chaque source Si est localisée sur une direction D1 par le premier capteur C1 et sur une direction D'1 par le second capteur C2 et peut être localisée spatialement par triangulation avec la dimension L4 de séparation des capteurs. Le dispositif assure dès lors une localisation spatiale et non plus seulement directionnelle d'une source lumineuse en calculant la distance C1 Sn ou C2 Sn dans le triangle C1, C2, Sn dont on connaît le côté C1 C2 et les directions des deux autres côtés.

Ce mode de fonctionnement permet d'accroître notablement la précision, il est possible de commencer par une détermination sommaire de la direction de la source avec un capteur et d'affiner ensuite la mesure par la combinaison des deux ou encore, de faire directement l'ensemble des mesures et donner aussitôt le résultat avec toute sa précision. Dans la pratique, il est possible de disposer plusieurs capteurs, ou groupements de deux capteurs, harmonisés entre eux pour couvrir un champ de plus grande étendue, ou de disposer plusieurs groupements d'émetteurs sur le casque du pilote pour assurer une couverture angulaire élargie pouvant aller jusqu'à $2\pi$ stéradians.

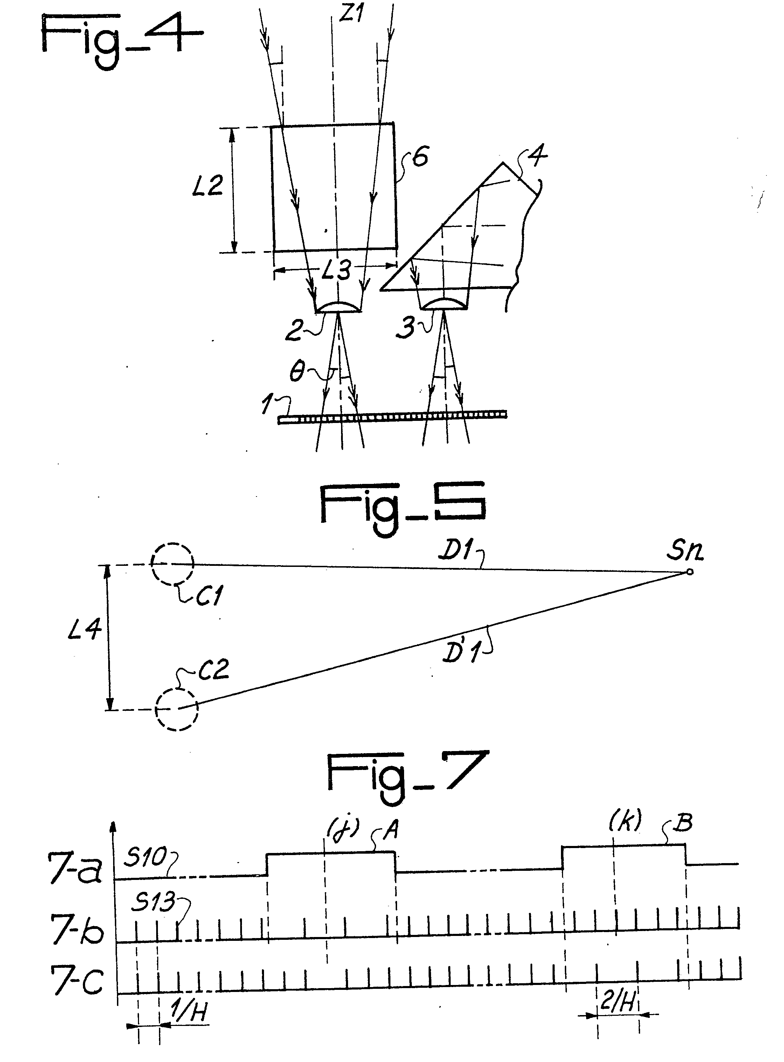

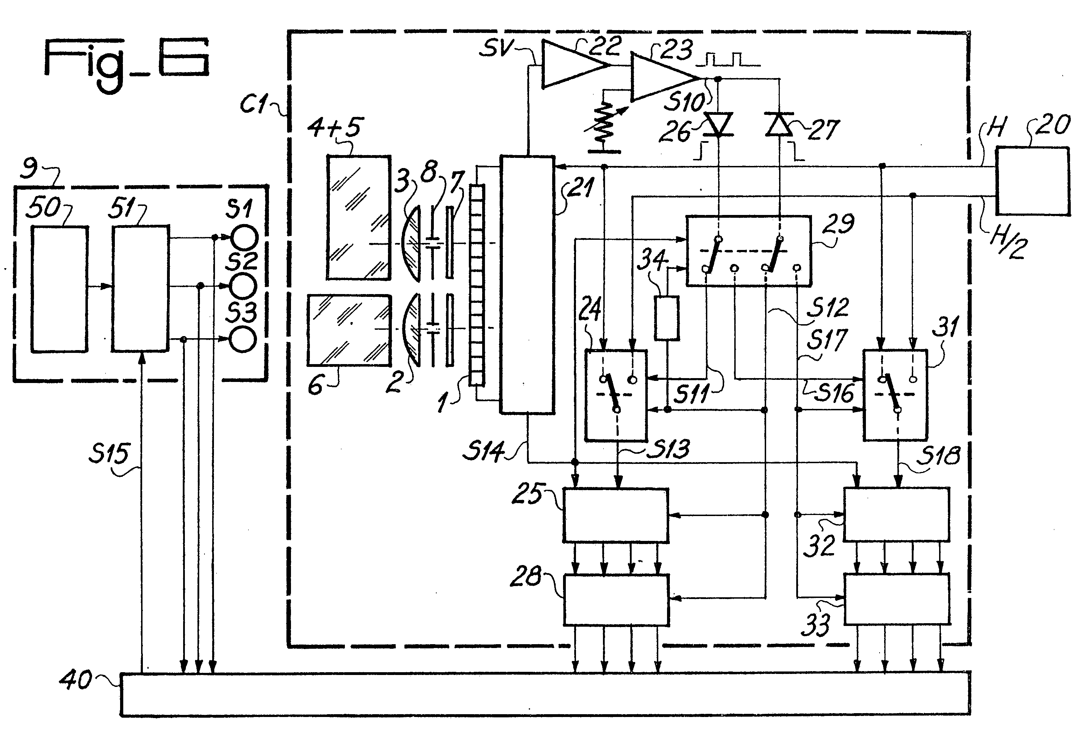

La figure 6 représente un instrument de repérage conforme à l'invention et plus particulièrement, un diagramme d'un exemple de réalisation des circuits électroniques pouvant être adjoints au montage opto-électrique d'un capteur selon les figures 1 ou 4. Par souci de simplification un seul capteur C1 a été figuré. La partie optique a été complétée par des éléments de filtrage optique 7 et de réglage de champ par diaphragme 8. Le filtrage optique 7 s'effectue dans la bande spectrale de longueur d'ondes correspondant à celle d'émission envisagée des sources étant entendu que le réseau linéaire détecteur 1 est également choisi en relation avec la bande d'exploitation ou vice versa. Chaque diaphragme 8 délimite un champ d'observation d'ouverture angulaire suffisante pour englober le volume d'évolution des sources. Des moyens de synchronisation commun à tous les capteurs sont symbolisés par un circuit horloge 20 qui délivre un signal formé d'impulsions à la fréquence H et un signal de fréquence moitié H/2. Le signal H synchronise des circuits de lecture 21 de la barrette photosensible 1 en circuits CCD. Par construction les éléments 21 et 1 sont réalisés en circuits intégrés sur un même support. Le signal détecté SV est amplifié dans un circuit 22 puis traité par comparaison à un seuil dans un circuit comparateur 23. Le signal résultant S10 représenté sur la figure 7a comporte deux impulsions A et B correspondant respectivement aux deux zones de focalisation centrées respectivement sur les rangs j et k de la barrette. On décrit d'abord le processus d'identification du rang j à l'aide des circuits 24, 25 et 28, l'identification du rang k étant obtenue de même à l'aide d'une deuxième voie similaire de circuits 31, 32 et 33.

Le signal H commande, par l'intermédiaire d'un circuit commutateur 24 un compteur 25. Le front avant S11 de la première impulsion A du signal S10 en sortie du comparateur 23 est sélectionné par une diode 26 et transmis au commutateur 24 pour commander la commutation de la fréquence de comptage à cet instant, remplaçant en sortie S13 du commutateur 24 le signal H par le signal H/2. Le front arrière S12 de la première impulsion A du signal S10 est sélectionné par une deuxième diode 27 et va commander d'une part, le commutateur 24 pour sélectionner à nouveau le signal H et d'autre part, le compteur 25 pour arrêter le comptage. En outre, le signal S12 commande le tranfert du résultat de comptage dans un registre tampon 28.

Le signal front arrière S12 déclenche, par ailleurs, à travers un petit élément retardateur 34 un circuit de commutation 29 qui commute les sorties de diodes 26 et 27 en sorte de commander de même manière la voie 31, 32, 33 d'identification du rang k par le front avant S16 et le front arrière S17 de la deuxième impulsion B du signal S10. Les figures 7b et 7c représentent respectivement les sorties S13 et S18 des circuits de commutation de fréquence d'horloge 24 et 31. Lorsque la totalité de la ligne d'éléments E1 à En de la barrette a été balayée, le circuit de lecture 21 délivre un signal S14 de fin de balayage pour réinitialiser les circuits. Le signal S14 commande la remise à zéro des compteurs 25 et 32 et la commutation à l'état initial du circuit 28. Un nouveau cycle de lecture reprend ensuite dans les mêmes conditions pour la source suivante. La solution adoptée permet de repérer l'élément central Ej et Ek sensibilisé dans les zones respectives compte tenu que la tache lumineuse focalisée sur la barrette par chaque lentille recouvre généralement plusieurs éléments photosensibles.

La partie relative à la structure mobile 9 comporte un circuit d'alimentation continue 50 des sources S1, S2 et S3 à travers un circuit de commutation 51. Un calculateur annexe 40 reçoit successivement les données de comptage des mémoires tampon 28 et 33 et fournit alors un signal S15 de commande du commutateur 51 pour connecter l'alimentation 50 vers la source suivante. Chaque sortie d'alimentation des sources lumineuses S1 à S3 est également connectée au calculateur 40 pour fournir l'adressage, c'est-à-dire l'identification de la source en cours d'émission. On notera que les moyens de synchronisation 20 peuvent être considérés inclus dans l'ensemble calculateur 40.

Les sources lumineuses peuvent être en nombre de trois pas groupement comme représenté sur la figure 3, ceci n'excluant pas d'en utiliser un nombre plus élevé. Pour l'application prévue à un viseur de casque, on peut répartir les composants de la manière suivante, deux groupements de trois diodes électroluminescentes, l'un à droite et l'autre à gauche du casque et de même, deux ensembles capteurs l'un à droite et l'autre à gauche du pilote situés vers l'avant du cockpit. Deux des trois diodes de chaque groupement peuvent être disposées parallèlement à la direction DV de référence mais ceci n'est pas une obligation. La commutation des diodes peut s'effectuer à haute cadence, en utilisant des diodes modulables à grande vitesse et ayant un temps de montée inférieur à 1 ms. L'émission d'un diagramme large si possible voisin de $2\pi$ stéradians autorise des rotations de grande amplitude puisque du même ordre pour la tête du pilote; en outre l'émission est choisie dans un domaine non visible pour ne pas gêner le pilote par des réflexions parasites, ce choix s'effectuant de préférence en infra-rouge par suite de l'existence de circuits CCD très sensibles dans ce spectre de longueur d'onde. Les barrettes CCD peuvent être analysées périodiquement au cours d'une durée de lecture inférieure à 2 ms; le nombre d'éléments photosensibles d'une barrette peut être très élevé, par exemple de l'ordre de 1 700 éléments. L'optique cylindrique 2 ou 3 est de faible dimensions, par exemple de l'ordre de 20 mm de longueur axiale, ayant une focale de 15 à 20 mm et une ouverture de 3 à 5 mm.

L'instrument de repérage décrit admet de nombreuses variantes de réalisation comprises dans le cadre de la présente invention, obtenues notamment en multipliant le nombre de groupement de diodes et/ou celui des capteurs fonctionnant en combinaison. La variante préférée décrite utilise chaque groupement de diodes en association avec deux capteurs, le calculateur pouvant, grâce à la triangulation correspondante affiner la mesure.

Il est entendu également que le capteur élémentaire peut utiliser une optique conventionnelle à base de lentilles cylindriques planconvexe comme figuré ou un groupement dioptrique plus élaboré.

Le dispositif de localisation décrit, combiné avec plusieurs sources ponctuelles permet de repérer continuement une direction d'axe de la structure mobile portant les sources.

## Revendications

1. Dispositif de localisation de source rayonnante comportant, un réseau linéaire d'éléments photosensibles associé à un cache optique laissant passer le rayonnement de la source compris dans deux plans secants, un circuit de traitement des signaux détectés identifiant le rang respectif des éléments sensibilisés par le rayonnement de la source compris dans les dits plans et un circuit de calcul déterminant à partir de l'identification de rang la localisation spatiale de la droite d'intersection des plans par rapport au dispositif de localisation, caractérisé en ce que le cache optique est réalisé au moyen de deux lentilles cylindriques (2—3) et d'un montage prismatique déviateur (4—5) introduisant une rotation d'image de 90° et que est interposé sur le trajet optique parvenant à une des lentilles; les lentilles étant identiques, disposées avec les axes longitudinaux (Y1—Y2) parallèle à une première direction cartésienne (Y) de référence, et dont les plans focaux sont coplanaires au niveau du réseau détecteur, lequel est parallèle aux axes longitudinaux des lentilles et orienté selon une deuxième direction cartésienne (X) de référence; le montage prismatique comportant deux prismes (4—5) rectangles, isocèles, disposés face hypothénuse contre face hypothénuse et dont les arêtes opposées à ces faces forment entre elles, un angle de 45°, le plan des faces hypothénuses étant parallèle au plan focal commun et l'une des arêtes ayant une direction (Y3) orthogonale à celle (X1) du réseau.

2. Dispositif selon la revendication 1, caractérisé en ce qu'un milieu transparent de propagation optique (6) est interposé sur le trajet optique incident du dispositif dioptrique non associé au montage prismatique dans le but d'égaliser les longueurs des trajets optiques.

3. Dispositif selon l'une quelconque des revendications 1 et 2, caractérisé en ce qu'un filtre optique (7) et un dispositif diaphragme (8) est interposé entre chaque dispositif dioptrique et le réseau, ce dernier étant formé d'une barrette en circuit CCD.

4. Dispositif selon l'une quelconque des revendications 1 à 3, caractérisé en ce que le circuit de traitement comporte un circuit (20) générateur d'un premier signal de synchronisation de fréquence (H) déterminée et d'un deuxième signal de fréquence moitié (H/2), un circuit de lecture (21) du réseau à la cadence du premier signal de synchronisation, un circuit détecteur de niveau (23) par comparaison à un seuil du signal détecté (SV) et alimentant en parallèle un circuit (26) de sélection de front avant et un circuit (27) sélecteur de front arrière, un circuit commutateur de voie (29) recevant les sorties de sélection et deux voies comportant chacune un circuit de commutation (24, 31), un circuit compteur (25, 32) et un circuit mémoire tampon (28, 32), l'ensemble étant agencé de sorte de commuter la fréquence du comptage dans chaque voie pour chacun des plans à identifier et obtenir un résultat de comptage correspondant au rang médian respectif des éléments sensibilisés.

5. Utilisation du dispositif de localisation de source rayonnante selon l'une quelconque des revendications 1 à 4, dans un instrument de repérage de la direction d'un axe mobile par rapport à un système d'axes de référence et qui comporte, une première structure à laquelle est lié le dit axe, au moins un groupement de sources lumineuses ponctuelles et alimentées l'une après l'autre séquentiellement, le groupement étant solidaire de la première structure, une deuxième structure à laquelle est lié le système d'axes, au moins un dispositif de localisation solidaire de la deuxième structure, la première structure étant mobile par rapport à la deuxième, caractérisé en ce que chaque groupement comporte au moins trois sources (S1, S2, S3) disposées aux sommets d'un polygone de forme quelconque, et qui sont constituées par des diodes électroluminescentes rayonnant dans une bande spectrale infrarouge.

6. Utilisation selon la revendication 5 et destinée à réaliser un appareil viseur de casque, caractérisé en ce que la première structure est constituée par le casque du pilote qui comporte latéralement de chaque côté, droite et gauche, au moins un groupement de sources ponctuelles, la deuxième structure étant constituée par le cockpit supportant au moins deux dispositifs de localisation fonctionnant respectivement avec lesdits groupements latéraux.

## Claims

1. Device for radiating source localisation, comprising a linear pattern of photosensitive elements associated with an optic mask allowing passage of radiation of the source comprised in two intersecting planes, a circuit for processing detected signals identifying the respective order of elements excited by the radiation of the source comprised in said planes, and a calculating circuit determining the spatial localisation of the intersection line of the planes with respect to the localisation device based on the identification of the order, characterized in that the optic mask is formed by two cylinder lenses (2—3) and a deflection prism arrangement (4—5) introducing a 90° image rotation and being interposed on the optic path towards one of the lenses; the lenses being identical, arranged with the longitudinal axes (Y1—Y2) parallel to a first cartesian reference direction (Y), and the focal planes of which are coplanar at the level of the detection pattern, which is parallel to the longitudinal lens axes and oriented along a second catesian reference direction (X); the prism arrangement comprising two rectangular isoceles prisms (4—5) arranged with the hypothenuse face against the hypothenuse face and the edges opposed to these faces forming an angle of 45° therebetween, the plane of the hypothenuse faces being parallel to the common focal plane, and one of the edges having a direction (Y3) normal to that (X1) of the pattern.

2. Device in accordance with claim 1, characterized in that a transparent optic propagation medium (6) is interposed on the optic path incident on the dioptric device which is not associated with the prism arrangement, in order to equalize the optic path lengths.

3. Device of claims 1 or 2, characterized in that an optic filter (7) and a diaphragm device (8) are interposed between each dioptric device and the pattern, the latter being formed of a CCD circuit bar.

4. Device of any of claims 1 to 3, characterized in that the processing circuit comprises a circuit (20) for generating a first synchronization signal of determined frequency (H) and a second signal of the half frequency (H/2), a circuit (21) for reading the pattern at the rate of the first synchronization signal, a circuit (23) for level detection by comparison of the detected signal (SV) with a threshold and for parallel feeding of a front edge selection circuit (26) and a rear edge selection circuit (27), a path commutation circuit (29) receiving the selection outputs, and two paths each comprising a commutation circuit (24, 31), a counting circuit (25, 32) and a buffer storage circuit (28, 32), the arrangement of the unit being such that the counting frequency is commutated in each path for each plane to be identified, and that a counting result is obtained corresponding to the respective average order of the excited elements.

5. Use of the radiating source localisation device of any of claims 1 to 4 in an instrument for determining the direction of an axis movable with respect to a system of reference axes, and comprising a first structure joined with said axis, at least one pattern of light point sources sequentially fed one after the other, the pattern being joined to the first structure, a second structure to which the system of axes is joined, at least one localisation device joined to the second structure, the first structure being movable with respect to the second, characterized in that each pattern comprises at least three sources (S1, S2, S3) arranged at the corners of a polygon or arbitrary shape, and which are formed by light emitting diodes radiating in an infrared spectrum range.

6. Use in accordance with claim 5 and intended to provide a helmet aiming apparatus, characterized in that the first structure is formed by the helmet of the pilot which comprises laterally on each side, right hand and left hand side, at least one pattern of point sources, the second structure being formed by the cockpit supporting at least two localisation devices respectively operating with the lateral patterns.

## Patentansprüche

1. Vorrichtung zur Lokalisierung einer Strahlungsquelle, enthaltend ein lineares Raster fotoempfindlicher Elemente, das einer optischen Maske zugeordnet ist, welche die Strahlung der Quelle durchläßt, die in zwei sich schneidenden Ebenen enthalten ist, eine Schaltung zur Verarbeitung der Detektionssignale, welche die jeweilige Rangfolge der durch die in den Ebenen enthaltene Strahlung der Quelle erregten Elemente identifiziert, und eine Rechenschaltung, die ausgehend von der Identifizierung der Rangfolge die räumliche Lokalisierung der Schnittgeraden der Ebenen in bezug auf die Lokalisierungsvorrichtung bestimmt, dadurch gekennzeichnet, daß die optische Maske verwirklicht ist mittels zwei Zylinderlinsen (2—3) und einer Ablenkprismaanordnung (4—5), die eine Bilddrehung um 90° einführt und auf dem optischen Weg eingefügt ist, der zu einer der Linsen führt; wobei die Linsen einander gleich sind und mit den Längsachsen (Y1—Y2) parallel zu einer ersten Bezugsrichtung (Y) eines rechtwinkeligen Koordinatensystems sind, während ihre Brennebenen auf dem Niveau des Detektionsrasters koplanar sind, welches parallel zu den Längsachsen der Linsen und gemäß einer zweiten Bezugsrichtung (X) des rechtwinkeligen Koordinatensystems orientiert ist; wobei die Prismenanordnung zwei rechtwinkelige, gleichschenklige Prismen (4—5) umfaßt, die Hypotenusenseite gegen Hypotenusenseite angeordnet sind und deren diesen Seiten gegenüberliegende Kanten untereinander einen Winkel von 45° bilden, während die Ebene der Hypotenusenseiten parallel zu der gemeinsamen Brennebene ist und eine der Kanten eine Richtung (Y3) aufweist, die rechtwinkelig zu derjenigen (X1) des Rasters ist.

2. Vorrichtung nach Anspruch 1, dadurch gekennzeichnet, daß ein lichtdurchlässiges optisches Ausbreitungsmedium (6) auf dem optischen Einfallsweg derjenigen lichtbrechenden Vorrichtung eingefügt ist, die der Primsaanordnung nicht zugeordnet ist, mit dem Ziel, die Längen der optischen Wege auszugleichen.

3. Vorrichtung nach Anspruch 1 oder 2, dadurch gekennzeichnet, daß ein optisches Filter (7) und eine Blendenvorrichtung (8) zwischen jeder lichtbrechenden Vorrichtung und dem Raster eingefügt sind, wobei letzteres aus einer stabförmigen CCD-Schaltung gebildet ist.

4. Vorrichtung nach einem der Ansprüche 1 bis 3, dadurch gekennzeichnet, daß die Verarbeitungsschaltung eine Schaltung (20) umfaßt, die ein erstes Synchronisationssignal bestimmter Frequenz (H) und ein zweites Signal halber Frequenz (H/2) erzeugt, eine Leseschaltung (21) zum Auslesen des Rasters im Rhythmus des ersten Synchronisationssignals, eine Detektorschaltung (23) zur Pegeldetektion des erfaßten Signals (SV) durch Vergleich mit einem Schwellwert und zur parallelen Speisung einer Vorderflanken-Selektionsschaltung (26) und einer Rückflanken-Selektionsschaltung (27) umfaßt, und eine Schaltung (29) zur Zweigumschaltung, welche die Selektionsausgangssignale empfängt, sowie zwei Zweige aufweist, die jeweils eine Umschaltanordnung (24, 31), eine Zählschaltung (25, 32) und eine Pufferspreicherschaltung (28, 32) enthalten, wobei die Gesamtanordnung so ausgelegt ist, daß die Zählfrequenz in jedem Zweig für jede der zu identifizierenden Ebenen umgeschaltet wird, und ein Zählergebnis erhalten wird, das der jeweiligen gemittelten Rangfolge der erregten Elemente entspricht.

5. Verwendung der Vorrichtung zur Lokalisierung einer Strahlungsquelle nach einem der Ansprüche 1 bis 4 bei einem Gerät zum Auffinden der Richtung einer Achse, die in bezug auf ein Bezugsachsensystem beweglich ist, mit einer ersten Struktur, mit welcher die genannte Achse verbunden ist, wenigstens einer Gruppierung von punktförmigen Lichtquellen, die sequentiell nacheinander gespeist werden, wobei die Gruppierung mit der ersten Struktur fest verbunden ist, einer zweiten Struktur, mit der das Achsensystem verbunden ist, wenigstens einer mit der zweiten Struktur fest berbunden Lokalisierungsvorrichtung, wobei die erste Struktur in bezug auf die zweite beweglich ist, dadurch gekennzeichnet, daß jede Gruppierung wenigstens drei Quellen (S1, S2, S3) umfaßt, die an den Ecken eines Polygons beliebiger Form angeordnet sind und die durch Leuchtdioden gebildet sind, die in einem Infrarot-Spektralbereich strahlen.

6. Verwendung nach Anspruch 5 zur Verwirklichung eines Helmvisiergerätes, dadurch gekennzeichnet, daß die erste Struktur durch den Pilotenhelm gebildet ist, der seitlich auf jeder Seite, der rechten und der linken, wenigstens eine Gruppierung von Punktquellen aufweist, wobei die zweite Struktur durch das Cockpit gebildet ist, welches wenigstens zwei Lokalisierungsvorrichtungen trägt, die jeweils mit den seitlichen Gruppierungen arbeiten.

0 003 696

Fig_1

Fig_2

# Fig_3

# Fig_4

# Fig_5

# Fig_7

3

Fig_6